**Europäisches Patentamt**

**European Patent Office**

**Office européen des brevets**

(11) Numéro de publication: **0 026 018**
**B1**

(12) **FASCICULE DE BREVET EUROPEEN**

(45) Date de publication du fascicule du brevet:
**30.05.84**

(21) Numéro de dépôt: **80200866.4**

(22) Date de dépôt: **15.09.80**

(51) Int. Cl.³: **D 06 F 37/00,** D 06 F 37/30,
D 06 F 37/26, F 16 H 7/14,
F 16 C 23/10

(54) Machine à laver et à essorer le linge à entraînement du tambour par courroie immergée.

(30) Priorité: **19.09.79 FR 7923321**
**19.09.79 FR 7923322**
**20.08.80 FR 8018209**
**20.08.80 FR 8018210**

(43) Date de publication de la demande:
**01.04.81 Bulletin 81/13**

(45) Mention de la délivrance du brevet:
**30.05.84 Bulletin 84/22**

(84) Etats contractants désignés:
**DE FR GB IT**

(56) Documents cités:
**Néant**

(73) Titulaire: **CONSTRUCTIONS ELECTRO-MECANIQUES D'AMIENS, 404, Route d'Abbeville, F-80000 Amiens (FR)**
(84) Etats contractants désignés: **FR**

(73) Titulaire: **N.V. Philips' Gloeilampenfabrieken, Groenewoudseweg 1, NL-5621 BA Eindhoven (NL)**
(84) Etats contractants désignés: **DE GB IT**

(72) Inventeur: **Devauze, Bruno, Société Civile S.P.I.D. 209, rue de l'Université, F-75007 Paris (FR)**
Inventeur: **Gauthier, Gerard, Société Civile S.P.I.D. 209, rue de l'Université, F-75007 Paris (FR)**
Inventeur: **de Hedouville, Philippe, Société Civile S.P.I.D. 209, rue de l'Université, F-75007 Paris (FR)**

(74) Mandataire: **Charpail, François et al, Société Civile S.P.I.D. 209, rue de l'Université, F-75007 Paris (FR)**

ACTORUM AG

## Description

L'invention concerne une machine à laver et à essorer le linge comportant une cuve destinée à recevoir l'eau de lavage ou de rinçage, à l'intérieur de laquelle peut tourner un tambour à linge d'axe sensiblement horizontal supporté par au moins un arbre monté dans un palier logé dans la paroi de cuve, un moteur électrique fixé à la cuve entraînant le tambour par l'intermédiaire d'une courroie tendue entre une poulie motrice et une poulie réceptrice solidaire du tambour, les poulies motrice et réceptrice, la courroie étant situées à l'intérieur de la cuve et baignant au moins partiellement dans l'eau de lavage ou de rinçage. La cuve est disposée dans une carosserie à laquelle elle est liée de façon élastique et amortie et la poulie motrice est montée sur l'arbre du moteur d'entraînement parallèle à l'axe du tambour et traversant la paroi de la cuve en un point situé entre le moteur et la poulie.

Une telle machine est connue du brevet français n° 1 277 784. Cependant, bien que ce brevet évoque l'essorage du linge par rotation rapide du tambour, il n'aborde et ne résoud pas les problèmes d'absorption des vibrations provoquées lors de cet essorage par le linge formant balourd. La machine décrite dans le brevet français 1 277 784 a une cuve fixe, solidaire de la carosserie et posée ou peut-être scellée au sol. La construction d'une telle cuve doit être très solide et lourde afin de résister aux vibrations dues à l'essorage. Depuis de nombreuses années, pour éviter cette lourdeur, les machines, domestiques notamment, sont constituées d'une carosserie à laquelle la cuve est liée par une suspension élastique et amortie, de façon à pouvoir osciller plus ou moins librement.

Ce deuxième type de machine à laver, très fréquent, est illustré par exemple par le brevet français n° 2 218 420. Généralement, la poulie réceptrice d'une telle machine est fixée sur l'arbre du tambour de lavage, à l'extérieur de la cuve, l'arbre traversant la paroi de cuve entre le tambour et la poulie. La poulie motrice est fréquemment montée directement sur l'arbre moteur qui est parallèle à l'axe du tambour, le moteur étant fixé extérieurement à la cuve. Cette disposition implique qu'entre la cuve et la carosserie extérieure de la machine à laver soit prévu un espace suffisant pour loger la transmission par courroie et poulies, espace tenant compte du fait que, pour l'amortissement des vibrations et oscillations, la cuve est montée ou suspendue au moyen de ressorts lui autorisant un certain ballant. Par ailleurs, pour éviter d'utiliser un arbre moteur trop long, donc peu rigide si la poulie motrice est montée en porte-à-faux à son extrémité, le moteur est généralement décentré et monté du côté de la cuve où se trouve la poulie réceptrice. Cette localisation du moteur oblige à équilibrer sa masse par un contrepoids fixé à la cuve, afin que le centre de gravité du bloc laveur constitué par le tambour, sa poulie, la cuve et le moteur, soit constamment dans le plan de symétrie perpendiculaire à l'axe de rotation du tambour, et cela, quel que soit le remplissage en eau de la cuve.

L'invention consiste à combiner les deux constructions mentionnées ci-dessus. Conformément à cette invention, dans une machine à laver à entraînement du tambour par courroie et poulies immergées, telle que décrite dans le préambule ci-dessus, le moteur est fixé de façon que le centre de gravité du bloc laveur constitué par le tambour, sa poulie, la cuve et le moteur soit sensiblement dans le plan de symétrie perpendiculaire à l'axe du tambour. Dans ce but la poulie réceptrice est implantée sur la surface cylindrique du tambour. On appelle plan de symétrie un plan sensiblement équidistant des flasques verticaux de la cuve, même si lesdits flasques n'ont pas des formes exactement symétriques.

L'invention permet donc de gagner de l'espace entre la cuve et la carosserie de la machine, et de supprimer la masse d'équilibrage du moteur, remédiant ainsi à deux défauts des machines du type à cuve suspendue élastiquement.

Le brevet français n° 1 277 784 déjà cité, mais aussi les brevets français 1 297 577 et allemand 1 585 877 divulguent l'utilisation d'une courroie immergée dans l'eau de lavage sans décrire les modalités d'application de cette disposition qui semblait, dans la pratique, se heurter à des préjugés sur l'existence d'obstacles techniques réels ou imaginaires à propos de l'adhérence de la courroie sur ses poulies en milieu aqueux et en présence de savons ou détergents, à propos de la résistance chimique du matériau de la courroie immergée dans un milieu acide ou alcalin, à température pouvant atteindre 95 °C, de sa résistance aux chocs thermiques, ... Or, il apparaît qu'une courroie trapézoïdale, ou à gorges multiples, ou à dents, soumise à une tension entre axes moteur et récepteur d'environ 10 daN, adhère suffisamment à ses poulies pour ne pas glisser lors du démarrage du moteur, c'est-à-dire à l'instant où le couple transmis est maximum. Il apparaît également que des matériaux à base d'élastomères tels que des néoprènes, ou à base de caoutchoucs thermoplastiques tels que polyesters ou polyurétannes, peuvent être employés pour constituer une courroie ayant une bonne stabilité de ses caractéristiques initiales de résistance à la rupture, à l'allongement, au déchirement, de son module d'élasticité, ayant une bonne résistance à la flexion, à l'abrasion et un bon coefficient de frottement, sur métaux par exemple. L'armature d'une telle courroie peut être par exemple constituée de fibres polyester ou de fibres de verre. Il est à remarquer d'ailleurs que dans le cas d'utilisation d'une courroie dentée, la poulie motrice, elle-même dentée, ne peut glisser dans la courroie, quel que soit le milieu dans lequel elles baignent.

Enfin, de nombreux documents, tels que les brevets américain 2 180 225, allemands 593 124 et 1 710 778 et français 2 392 161 décrivent des machines à laver dans lesquelles la cinématique d'entraînement du tambour est partiellement localisée dans la cuve et immergée, mais d'une part il s'agit d'entraînement à pignon et roue dentés engrenant, et d'autre part ces machines ont une cuve fixe non susceptible d'osciller par rapport à une carrosserie indépendante. Ces documents ne concernent donc aucun des deux termes de la combinaison objet de la présente invention.

Dans un mode de réalisation préférentiel de la machine à laver, la poulie motrice est montée sur l'arbre du moteur d'entraînement parallèle à l'axe du tambour et traversant la paroi de cuve en un point situé entre le moteur et la poulie, et la poulie réceptrice est implantée sur la surface cylindrique du tambour. Ainsi, l'encombrement de la poulie réceptrice est encore diminué pour libérer totalement le volume interne de la cuve au profit du tambour. Cette solution permet de réduire au minimum la distance séparant le palier de sortie du moteur de la poulie motrice montée en porte-à-faux. Pour un diamètre de tambour de l'ordre de 0,45 m, un rapport de réduction de vitesse de $^1/_{16}$ sera obtenu avec un diamètre de poulie motrice d'environ 28 mm.

La poulie réceptrice peut être formée d'un seul tenant avec le tambour, ou peut être rapportée sur sa surface cylindrique. Elle est de préférence constituée par cette surface elle-même qui reçoit donc alors directement la courroie d'entraînement. Le matériau de cette dernière est alors choisi notamment pour son coefficient de frottement sur la tôle d'acier inoxydable dont sont constituées le plus souvent les viroles de tambour de lavage. Une courroie à section présentant des gorges multiples ou à dents est particulièrement indiquée pour que ne se crée pas un film de liquide entre elle et la surface de la poulie et/ou du tambour.

Le fait que l'arbre moteur pénètre à l'intérieur de la cuve permet de monter simplement une turbine de pompe à son extrémité turbine destinée à tourner dans un corps de pompe aménagé dans la paroi de cuve pour la vidange de l'eau de lavage ou de rinçage. Dans ce mode de réalisation, le moteur et la pompe alignés occupent par rapport à la cuve une position basse, afin d'en assurer la vidange complète. La pompe peut être du type centrifuge, l'eau y accédant axialement par un diaphragme centré sur la turbine. L'accès de l'eau peut être aussi réalisé par un passage ménagé dans le corps de pompe pour qu'en fin de pompage l'eau résiduelle ne soit plus en contact avec la poulie motrice et la courroie, évitant à cette dernière, entre deux lessives, des séjours prolongés dans l'eau.

La disposition de la pompe en bout d'arbre moteur implique que la turbine est mise en rotation chaque fois que le moteur fonctionne, et notamment lors du lavage du linge et lors de son essorage. Pendant le lavage, la vitesse de rotation du moteur est par exemple de 800 t/mn, le dessin de la pompe ne doit pas permettre le pompage à cette vitesse. Il en résulte tout de même une action de brassage de l'eau séjournant en fond de cuve, notamment lors de l'arrêt et de l'inversion du sens de rotation du moteur. Ce brassage permet d'améliorer la dissolution des poudres de lessives qui ont tendance à se déposer au fond de la cuve.

Pour vidanger la cuve, la pompe est actionnée à une vitesse proche de 2000 t/mn, ce qui impose au tambour, pour un rapport de $^1/_{16}$, une vitesse de 120 t/mn. Enfin, lors de l'essorage du linge, pour que le tambour atteigne une vitesse de 1000 t/mn par exemple, la turbine de pompe tournera à 16 000 t/mn.

Dans le cas d'une machine à laver à chargement par le dessus, à carrosserie parallélépipèdique et dans laquelle le tambour est supporté par deux arbres, pour bénéficier pleinement de la place laissée libre par la suppression de la poulie réceptrice à l'extérieur de la cuve, un mode de réalisation préférentiel de l'invention se caractérise par le fait que:

- d'une part, selon la direction axiale de la cuve, le rapport longueur de cuve/largeur de carrosserie est rendu voisin de 0,9. Une telle disposition permet d'augmenter la longueur du tambour de lavage, à largeur de carrosserie constante. Par exemple, pour une largeur de carrosserie de 40 cm, la longueur maximale de la cuve peut être portée à environ 36 cm et le volume du tambour à 45 litres au lieu de 42 litres dans les machines à laver plus classiques;

- d'autre part, les flasques de la cuve ont une forme approximativement conique à concavité tournée vers l'intérieur, la cuve étant montée dans la carrosserie de façon telle que chaque flasque soit inscrit dans un cône dont le sommet est le point d'intersection de l'axe de cuve avec la carrosserie et dont l'angle au sommet mesure approximativement 160°. En effet, la cuve étant montée de façon élastique et amortie dans la carrosserie, pour l'absorption de ses vibrations et de ses oscillations, il n'est pas possible pratiquement d'éliminer totalement les oscillations provoquées en début d'essorage par le linge humide formant balourd dans le tambour.

Les mouvements les plus difficiles à éviter sont dûs aux oscillations de l'axe de tambour et de cuve autour de sa direction nominale (de repos). Dans la machine à laver selon l'invention, étant donné l'étroitesse de l'espace séparant la cuve de la carrosserie, de tels mouvements sont susceptibles de provoquer des dégâts, la périphérie des flasques de cuve pouvant heurter la carrosserie. L'angle de garde de 160° permet aux oscillations de l'axe de cuve d'atteindre ±10° de part et d'autre de sa direction nominale.

Lors de l'assemblage d'une machine à laver, il est nécessaire de régler la tension de la courroie. Sur les machines à poulies et courroie extérieures à la cuve, cette opération se fait généralement lors de la fixation du moteur d'entraînement sur la cuve, par exemple une patte de fixation du moteur comporte à cet effet un orifice allongé, où le moteur est fixé sur une platine réglable en position. Dans la machine à laver selon la présente invention, la poulie motrice étant contenue dans la cuve, son déplacement transversal peut être rendu impossible, notamment parce que l'arbre moteur sur lequel est fixée cette poulie doit pénétrer dans la cuve à travers un joint d'étanchéité. Il peut être également gênant d'avoir à déplacer le moteur, notamment parce qu'il est inséré dans une fixation destinée à éviter la transmission des vibrations à la cuve.

Dans un mode de réalisation préférentiel de l'invention, la tension de courroie est réglable du fait que la position du palier d'arbre tambour est ajustable radialement par rapport à la cuve. Dans le cas où le tambour est supporté à chacune de ses extrémités par un arbre, les deux paliers peuvent être ajustables. Il est connu en soi, du brevet américain 2 691 553 par exemple, de régler radialement la position d'un palier d'arbre de poulie en vue de tendre une courroie. Cependant, cette disposition n'a pas été appliquée à l'arbre du tambour d'une machine à laver. Si elle a déjà été suggérée sur un séchoir à tambour rotatif, notamment dans le brevet américain n° 2 506 516, elle n'était pas transférable sur machine à laver, car ce n'était pas la position du palier qui était alors ajustable mais son orientation, ce qui, sur machine à laver, rendrait l'étanchéité très difficile à réaliser. Enfin, sur le séchoir décrit dans ce brevet américain n° 2 506 516, l'axe du palier et de l'arbre de tambour traverse la paroi de cuve en un point fixe proche de la poulie, un rattrapage de tension de courroie de quelques millimètres peut se traduire par une inclinaison de l'axe du tambour de quelques degrés, ce qui peut être rédhibitoire dans une machine à laver où le tambour est proche de la paroi de la cuve.

De préférence, le palier est inséré dans un support de palier susceptible de tourner dans un logement de révolution traversant la paroi de la cuve, l'axe dudit logement étant parallèle et distinct de l'axe du palier. Par rotation du support, et du fait de l'excentricité de son axe par rapport à celui du palier, on obtient une translation de ce dernier et le réglage recherché de l'écartement entre l'axe du tambour et de la poulie réceptrice associée et l'axe de la poulie motrice. Cet écartement conditionne la tension qui doit être donnée à la courroie de transmission lors du montage.

En particulier, il est préférable que le support soit conformé pour être axialement retenu dans son logement, dans un sens par butée sur un épaulement dudit logement, et dans l'autre sens au moyen d'ergots s'engageant axialement dans des encoches pratiquées dans un collet du logement et se verrouillant sur ledit collet lors de la rotation du support de palier dans le logement. Le verrouillage du support de palier est ainsi obtenu par un système «à baïonnette». Le nombre et la périodicité des ergots et des encoches sont conditionnés par l'ampleur de la rotation du support jugée nécessaire, la rotation utile n'excédant d'ailleurs pas 180°, entre les positions extrêmes du palier. Les surfaces en butée axiale du support de palier et de son logement peuvent être munies de crans et de plots élastiques créant une résistance à l'encontre de laquelle doit être ajustée la position angulaire du support de palier.

Dans un autre mode de réalisation, le support de palier et son logement dans la paroi de cuve sont munis sur leur pourtour d'un accouplement à dents et cliquet créant une résistance à la rotation du support de palier dans son logement. Par exemple, le support sera équipé de deux cliquets diamétralement opposés et l'intérieur de son logement portera des dents n'autorisant le déplacement des cliquets que dans le seul sens correspondant à la tension de la courroie. Une telle disposition évite que des vibrations de la machine et la tension de la courroie ne fassent tourner le support de palier dans le sens du relâchement de cette dernière. Ainsi, la force tournante créée par le balourd que constitue le linge mal réparti a spontanément tendance à faire tourner le support de palier pour assurer le rattrapage de la tension, au cours de la vie de la machine à laver.

Afin que, lors du réglage de la tension de courroie, la position du support de palier correspondant à la tension maximale ne soit pas dépassée, le logement du support comporte une butée périphérique limitant la rotation du support de palier par rapport à la cuve. Cette disposition permet aussi d'éviter le désengagement du verrouillage «à baïonnette» du support dans son logement.

Le montage de l'arbre de tambour dans la paroi de cuve doit être étanche à l'eau. De préférence, le support de palier et son logement comportent des surfaces cylindriques de révolution axiales et complémentaires, la surface cylindrique du support de palier étant creusée d'une gorge périphérique destinée à recevoir un joint élastique torique assurant l'étanchéité entre la cuve et le support de palier. Ce joint est suffisant dans la mesure où les deux surfaces cylindriques du support et de son logement ne sont pas en mouvement relatif lors du fonctionnement de la machine. L'étanchéité entre pièces en rotation relative peut être de préférence obtenue du fait que le support de palier comporte à l'intérieur de la cuve un épaulement de surface plane perpendiculaire à l'axe et sur laquelle vient presser un joint à lèvre monté sur l'arbre du tambour pour assurer l'étanchéité entre la cuve et le palier. Cette seconde étanchéité permet de maintenir le palier, un roulement à billes par exemple, isolé de l'espace intérieur à la cuve, donc de l'eau de lavage.

Il est particulièrement avantageux de réaliser le support de palier en matière synthétique moulée d'une seule pièce par injection, matière compacte ou allégée ou matière chargée de fibres de verre par exemple, une telle matière peut être du polypropylène, un polyamide, un polyacétal, etc...

On a déjà mentionné plus haut que dans la machine conforme à l'invention, le fait d'immerger dans la cuve la transmission par poulies et courroie permet de «centrer» le moteur par rapport à la cuve suspendue, en évitant l'emploi d'un arbre de moteur de grande longueur, en porte-à-faux, ce qui nécessiterait d'en augmenter le diamètre ainsi que celui des paliers du moteur, ou d'implanter sur la cuve un palier supplémentaire aligné avec précision avec les paliers du moteur.

Pour conserver les avantages de cette disposition, il faut donc que le moteur soit le plus proche possible de la paroi de la cuve, dans la zone que traverse l'arbre. Par ailleurs, l'étanchéité doit être assurée à l'endroit où l'arbre pénètre dans l'espace intérieur de la cuve, au moyen d'un joint entre pièces en rotation relative. Pour faciliter l'exposé, on parlera plus loin d'un «joint tournant», bien qu'un joint immobile comprimant la périphérie de l'arbre soit également utilisable. La vitesse de rotation de l'arbre moteur, qui peut atteindre 20 000 tours/minute, nécessite un «joint tournant» de précision, qui doit donc être monté entre deux pièces aux cotes précisément définies. Cette précision est d'autant plus nécessaire si l'arbre est, dans le bas de cuve, immergé en permanence dans le liquide de lavage. Pour cette raison, il n'est pas souhaitable que ce «joint tournant» soit monté entre l'arbre du moteur et la paroi de la cuve de la machine à laver. Cette solution nécessiterait d'ajuster avec précision la position respective de ces deux éléments lors de leur assemblage, et, de plus, interdirait de monter le moteur sur la cuve de façon élastique en vue de l'amortissement de ses vibrations.

Dans un mode de réalisation préférentiel de l'invention, les objectifs ci-dessus sont atteints du fait que le flasque avant du moteur, que traverse l'arbre, vient en butée sur un joint statique disposé dans l'orifice de traversée de la paroi de cuve, un joint entre pièces en rotation relative étant monté entre l'arbre moteur et ledit flasque avant. Ainsi, le moteur est positionné contre la paroi de cuve et son axe peut être maintenu court. Le joint statique est utilisé simultanément pour assurer en partie l'étanchéité, pour définir la position longitudinale du moteur, et pour établir une liaison élastique entre le moteur et la paroi de cuve. D'autre part, le «joint tournant» est monté entre l'arbre du moteur et son palier avant, deux éléments assemblés avec une étroite marge de tolérance par le constructeur du moteur, ce qui garantit le bon fonctionnement de ce «joint tournant» qui n'intervient pas dans le positionnement de l'axe dans l'orifice de traversée de la paroi de cuve.

Des deux brevets français cités plus haut, n° 1 277 784 et 1 297 577, le premier n'évoque ni le mode de fixation du moteur ni l'étanchéité, et le second montre un moteur dont la rotation est transmise à un très long arbre intermédiaire, lui-même monté par deux paliers sur la cuve dans laquelle il pénètre par deux joints placés directement entre la paroi de cuve et l'arbre intermédiaire.

Dans la machine à laver selon ce mode de réalisation, l'arbre du moteur ainsi qu'au moins une partie de son flasque avant est donc en contact avec l'eau de lavage. Il est à cet égard préférable qu'il n'y ait pas de contact électrique entre l'eau et les éléments métalliques du moteur. Dans ce but, une machine selon un mode de réalisation préférentiel est caractérisée par le fait que le flasque avant du moteur en contact avec les joints, ainsi que l'arbre moteur depuis le joint tournant jusqu'à son extrémité libre située à l'intérieur de la cuve sont constitués ou recouverts de matériau électriquement isolant.

Il est avantageux d'utiliser le joint statique pour déterminer également la position transversale du moteur d'entraînement. A cette fin, dans un autre mode de réalisation préférentiel, le flasque avant du moteur fait saillie vers l'intérieur de la cuve à travers le joint statique. En particulier, il est souhaitable que l'étanchéité statique ne soit pas tributaire d'une pression exercée par le moteur contre ce joint statique mais soit maintenue quelles que soient les oscillations et vibrations du moteur autour de sa position nominale, ce qui autorise l'établissement, entre moteur et cuve, de liaisons non rigides, donc moins bruyantes. Dans cette perspective, le joint statique est constitué d'un anneau de section rectangulaire en matière élastique présentant une gorge périphérique extérieure pour sa mise en place autour de l'orifice de traversée de la paroi de la cuve, et une lèvre d'étanchéité à sa périphérie interne. De même, il est préférable d'autoriser au moteur une faible oscillation élastique autour de son axe, lors des démarrages et arrêts, dans ce but, le joint statique et la partie du flasque avant du moteur qu'il reçoit sont de révolution autour de l'axe moteur.

Le moteur, par son flasque avant (côté arbre), venant en butée contre le joint statique placé sur la paroi de la cuve, plusieurs moyens peuvent le maintenir dans cette position, par exemple, une bride solidaire de son flasque avant, une patte de fixation appartenant à sa carcasse. Mais dans un mode de réalisation préférentiel, le moteur est maintenu en position contre le joint statique au moyen d'un collier enserrant une partie en saillie de son flasque arrière, ledit collier étant fixé à la cuve. En particulier, un anneau de matériau élastique peut être intercalé entre le collier et la partie en saillie du flasque arrière du moteur, afin de minimiser la transmission des vibrations (du bruit) du moteur à la carrosserie.

Dans l'éventualité d'adapter des moteurs de tailles différentes sur la même cuve de machine à laver, la solidarisation du collier de fixation arrière du moteur à la cuve doit être réglable. Notamment, le collier de fixation arrière du moteur est lui-même monté sur la paroi de la cuve au moyen d'au moins un accouplement par glissière et coulisseau parallèle à l'axe moteur. Cet accouplement présente en outre l'avantage d'une grande simplicité de mise en œuvre lors du montage du moteur, puisqu'il peut être exclusif de tout vissage.

Dans le cas, notamment, où le joint statique d'étanchéité placé entre la cuve et l'avant du moteur est de révolution, il peut être souhaitable que la fixation arrière limite les oscillations du moteur autour de son axe. Dans ce but, le collier de fixation arrière du moteur et la partie du flasque arrière qu'il reçoit ne sont pas de révolution.

La description qui suit et les dessins illustrent des exemples de réalisation de machines à laver conformes à l'invention.

La fig. 1 représente une coupe d'une machine à laver selon l'invention, coupe passant par l'axe de cuve et l'axe moteur.

Les figs 2 et 3 représentent, très simplifiées, une cuve en matière plastique destinée à la machine à laver selon l'invention.

La fig. 4 est une coupe du détail de montage de l'arbre de tambour par rapport à la cuve d'une telle machine à laver.

Les figs 5a et 5b sont deux demi-vues du support de palier de la fig. 4, vu de l'extérieur de la cuve (fig. 5a) et vu de l'intérieur (fig. 5b).

La fig. 6 est une coupe d'une seconde version d'un support de palier d'une machine selon l'invention.

La fig. 7 représente en coupe la zone de la paroi de cuve que traverse l'arbre moteur de la machine de la fig. 1.

La fig. 8 est une vue en perspective des moyens désassemblés de fixation arrière du moteur de la machine de la fig. 1.

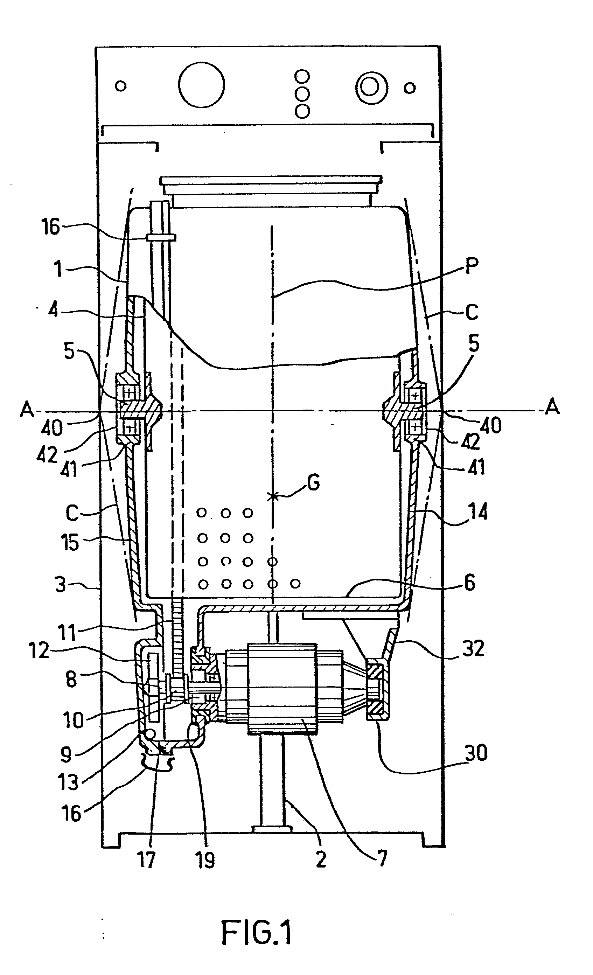

La fig. 1 est une vue partiellement éclatée, partiellement en coupe d'un exemple de machine à laver et à essorer le linge conforme à l'invention, dans laquelle la cuve 1 destinée à recevoir l'eau de lavage ou de rinçage est supportée par deux jambes à ressort et amortisseur 2, par rapport à une carrosserie extérieure 3 et à son socle. La cuve 1 contient un tambour de lavage 4, réalisé en tôle d'acier inoxydable, perforé et monté par ses arbres 5 dans deux paliers étanches logés dans la paroi de la cuve, les arbres 5 définissant pour le tambour un axe de rotation AA sensiblement horizontal. Dans l'exemple représenté, la cuve est ouverte en son sommet et la virole 6 (ou surface cylindrique) du tambour comporte une porte pour le chargement et le déchargement du linge à laver. Sur la cuve, à l'extérieur et à sa partie inférieure est monté le moteur électrique 7 d'entraînement du tambour dont l'arbre 8 pénètre directement dans un logement appartenant à la cuve, à travers un joint 9. A l'intérieur de la cuve, l'arbre moteur 8 porte une poulie motrice 10 recevant une courroie 11, dentée dans l'exemple dessiné. Cette courroie 11 est par ailleurs tendue sur la virole 6 du tambour de lavage servant elle-même de poulie réceptrice.

En extrémité d'arbre moteur 8 est montée la turbine 12 d'une pompe 13 dont le corps communique avec la cuve par un espace annulaire traversé par l'arbre 8 entre la poulie et la turbine, le corps de pompe communique avec la tuyauterie d'évacuation de l'eau de la machine à laver.

Le bloc laveur de la machine, constitué de la cuve 1, du tambour 4 et du moteur 7 ... n'est lesté par aucune masse d'inertie ou d'équilibrage, le moteur étant positionné pour que sa masse équilibre sensiblement les dissymétries de la cuve. C'est-à-dire, le centre de gravité G du bloc laveur reste approximativement dans le «plan de symétrie» P vertical perpendiculaire à l'axe du tambour. Par «plan de symétrie», il faut entendre un plan médian sensiblement équidistant des flasques de la cuve 1 et par conséquent des flasques du tambour 4, le tambour occupant ici tout l'espace disponible à l'intérieur de la cuve. De ce fait, lors du remplissage en eau de la cuve, et lorsque le tambour est uniformément chargé de linge, le centre de gravité de l'ensemble se déplace verticalement et la cuve ne s'incline pas par rapport à la carrosserie.

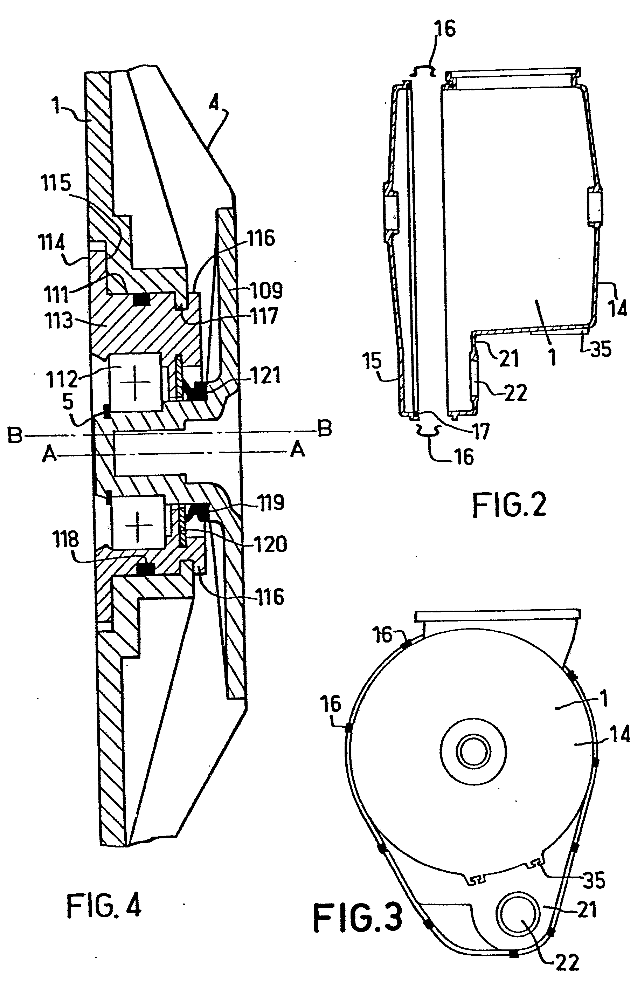

La cuve 1, ainsi que le logement recevant l'arbre 8, peuvent être constitués de matière synthétique injectée, par exemple de polypropylène allégé ou chargé de fibres. Cette solution rend très facile l'obtention d'un seul tenant des différents éléments de la cuve, qui peut être constituée comme le montrent les figs 1 et 2 d'un corps principal 14 sensiblement cylindrique, fermé par un couvercle 15. Le corps et le couvercle sont reliés par des agrafes élastiques 16 et compriment entre eux un joint d'étanchéité 17.

L'axe géométrique AA commun à la cuve et au tambour, défini par les arbres de tambour 5, a été représenté en traits mixtes. Lorsque la machine est au repos (position montrée sur la figure), l'axe AA coupe le contour de la carrosserie 3 de la machine en deux points virtuels 40. La géométrie de la machine conforme à l'invention est telle que les parois verticales, ou flasques, de la cuve cylindrique 1 sont inscrites chacune dans un cône C d'axe AA, de sommet l'un des points 40 et d'angle au sommet voisin de 160°. Les flasques de cuve sont eux-mêmes coniques, de concavité tournée vers l'intérieur, de sorte que la longueur maximale de la cuve se mesure entre les logements 41 ménagés au centre des flasques pour recevoir les paliers d'arbres de tambour, et plus précisément entre les faces extérieures 42 de ces logements 41. Dans l'exemple représenté, cette longueur maximale de cuve est égale à 90% de la largeur de carrosserie entre les points 40, soit par exemple 36/40 cm. La largeur de carrosserie à laquelle il est fait référence est la largeur intérieure, mais la carrosserie de ce type de machine à cuve suspendue est faite d'une mince tôle d'acier, au plus épaisse de 1 mm, ce qui est petit par rapport à la largeur de cuve (40 cm). Une telle géométrie permet d'accroître le volume de la cuve, donc du tambour 4, à l'intérieur d'une carrosserie de dimensions données.

Pour obtenir un entraînement correct du tambour et éviter le glissement de la courroie sur ses poulies, lors des démarrages du moteur, la tension de la courroie doit être ajustée à une valeur suffisante : la force exercée entre les deux axes de poulie sera par exemple de 10 daN. Dans la machine à laver selon l'invention, le réglage de cette tension de courroie est obtenu par ajustement de la position d'un palier d'arbre de tambour, ou des deux paliers. Mais il sera généralement suffisant de prévoir un palier réglable du côté du tambour où la courroie exerce sa tension. La fig. 4 montre un exemple de réalisation de palier réglable en position. La référence 1 désigne ici aussi la paroi de la cuve ou un élément rapporté sur cette paroi pour supporter le tambour. Le tambour de lavage 4 porte au centre de son flasque une pièce de renfort 109, sur laquelle est pris l'arbre 5 d'axe AA. Dans la paroi de cuve 1 est ménagé un logement cylindrique de révolution 111 d'axe BB parallèle mais distinct de l'axe AA du tambour 4. L'arbre 5 est monté à rotation dans un palier 112 qui peut être un palier lisse ou un roulement à billes ou à rouleaux. Ce palier 112 est inséré dans un support 113, de forme cylindrique de révolution, s'adaptant avec frottement dans le logement 111, et donc d'axe BB également. Il apparaît clairement que par rotation du support de palier 113 dans son logement 111 dans la paroi de cuve, on obtient une rotation de l'axe AA du tambour autour de l'axe BB du logement, et par là une variation de la distance séparant l'axe du tambour de l'axe de la poulie motrice 10 (fig. 1). Une variation de quelques millimètres de cette distance suffit à tendre la courroie 11. La rotation du support de palier 11 sera par exemple réalisée au moyen d'une clé s'adaptant sur cette pièce. La très petite distance des axes AA et BB explique qu'à l'échelle de l'ensemble cuve-tambour on ait, plus haut, confondu ces deux axes.

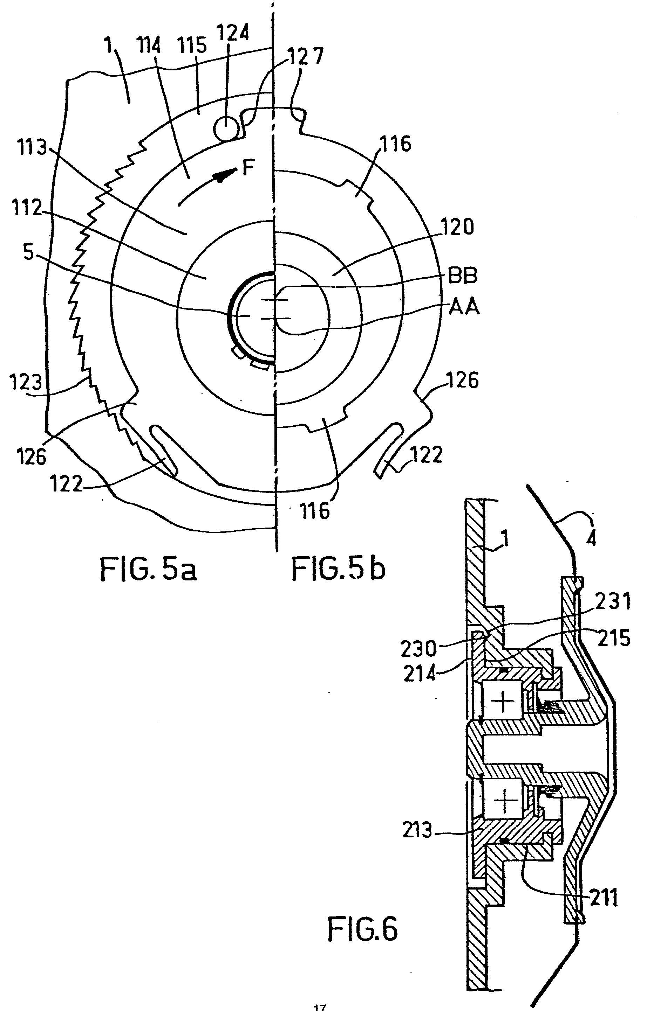

L'immobilisation axiale du support de palier est obtenue dans l'exemple dessiné de la façon suivante. De gauche à droite, c'est-à-dire vers l'intérieur de la cuve, le support 113 repose par une collerette 114 contre un épaulement 115 du logement 111. De droite à gauche, c'est-à-dire vers l'extérieur de la cuve, le support est maintenu par l'engagement d'ergots 116 contre un collet 117 restreignant l'ouverture du logement 111 vers l'intérieur de la cuve. Ce collet 117 est interrompu par des encoches (non dessinées) permettant l'introduction des ergots 116 du support, avant leur verrouillage obtenu par rotation du support, à la manière d'un accouplement à baïonnette. Le nombre d'ergots 116 sera par exemple de quatre, comme le suggère la fig. 5b.

L'étanchéité entre l'intérieur et l'extérieur de la cuve de machine à laver est assurée par deux joints. D'une part, entre les deux surfaces cylindriques du logement 111 et du support 113, un joint torique 118, en matière élastique, est comprimé à l'intérieur d'une gorge périphérique creusée dans la surface cylindrique du support. D'autre part, entre l'arbre 5 du tambour et le support 113, un joint à lèvre 119 est enfilé sur l'arbre et sa lèvre vient presser contre une portée de joint 120 appartenant au support. La portée de joint peut être constituée d'une rondelle d'acier inoxydable autour de laquelle est surmoulé le support de palier. Le joint 119 est positionné sur l'arbre du tambour par un épaulement 121 de cet arbre.

La fig. 5a est une demi-vue, depuis l'extérieur, du montage de l'arbre 5 montré sur la fig. 4. On y constate l'excentricité de l'arbre 5 et de son roulement 112 (axe AA) par rapport au support de palier 113 (axe BB). Dans le mode de réalisation dessiné, la rotation du support 113 par rapport à son logement dans la paroi de cuve 1 est freinée par l'action d'un cliquet radial 122 appartenant au support 113 contre une denture 123 périphérique interne de l'évasement du logement correspondant à l'épaulement 115. Cliquet et denture peuvent être doublés par symétrie par rapport à l'axe BB. Cette denture 123 affecte la forme de celle d'une roue à rochet, n'autorisant la rotation du support 113 que dans la direction de la flèche F. Cette rotation est d'ailleurs limitée par un plot 124 appartenant à la paroi de la cuve, et plus particulièrement faisant saillie de la surface de l'épaulement 115. A cet effet, la collerette 114 du support comporte une encoche délimitée par deux talons 126 et 127 définissant la course maximale en rotation du support.

La fig. 5b est une demi-vue de l'intérieur de la même fraction du support de palier 113 représenté isolé de la cuve et de l'arbre de tambour.

Le support de palier 113 ainsi que la paroi de cuve 1, au moins dans sa partie entourant le logement 111, sont avantageusement réalisés en matière synthétique moulée par injection. Cela permet d'obtenir d'un seul tenant des pièces aux contours complexes notamment le logement 111, son épaulement 115, son plot 124, sa denture 123 et son collet 117 avec les encoches correspondant aux ergots 116 du support, et le support de palier 113 avec sa collerette 114, les talons 126 et 127, le cliquet 122, les ergots 116, et incluant la portée de joint 120, etc. . . .

L'assemblage des éléments décrits ci-dessus est réalisé de la façon suivante. Le support de palier est introduit dans son logement, les ergots 116 pénétrant dans leurs encoches et le talon 127 étant proche du plot 124, le support est alors tourné dans le sens de la flèche F (fig. 5a) pour le verrouillage des ergots 116. Ce verrouillage correspond à l'emprise du cliquet 122 dans la première dent de la denture 123. Ultérieurement, lorsque la courroie d'entraînement du tambour est en place, le support 113 est tourné d'avantage jusqu'à obtention de la tension de courroie recherchée. Dans l'exemple illustré fig. 5a, la rotation maximale du support est de 110° environ, ce qui, pour un entre-axes AA–BB de 4 mm, permet un écartement de 6,5 mm de l'axe AA par rapport à la poulie motrice de la courroie.

La fig. 6 est une coupe d'une autre version de l'assemblage décrit plus haut. Le support de palier 213 et son logement 211 y sont sensiblement identiques à ceux des figs 4, 5a, 5b, à cette différence près que la résistance à la rotation du support est réalisée par des plots longitudinaux 230 faisant saillie à l'intérieur de la collerette 214 du support et coopérant avec des encoches 231 creusées dans l'épaulement 215 du logement.

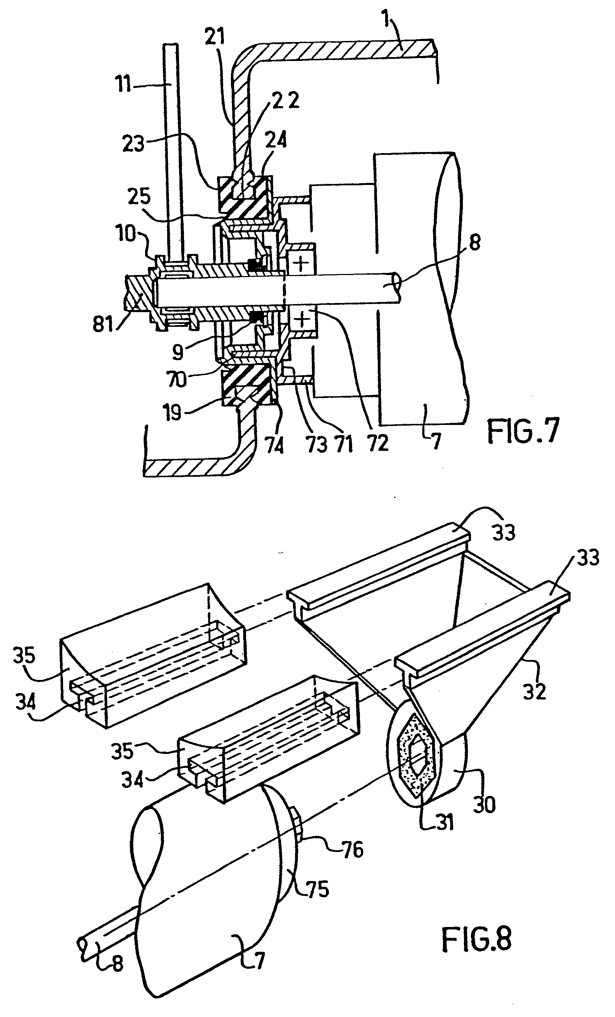

La fig. 7 représente en coupe les différents organes que traverse l'arbre 8 du moteur 7 dans la zone où il pénètre dans la cuve 1. Dans cette zone, la paroi de cuve présente une face 21 sensiblement normale à l'axe du tambour (donc du moteur) et qui constitue la paroi du logement situé sous la cuve et contenant la poulie motrice 10 et la turbine de pompe (voir aussi figs 2 et 3). Cette face 21 est percée d'une ouverture 22 autour de laquelle est monté le joint statique 19 qui a la forme d'un anneau de matière élastique. Une gorge périphérique extérieure forme sur le joint 19 deux ailes 23, 24 qui épousent, à l'intérieur et à l'extérieur de la cuve, les bords de l'ouverture 22. Pour améliorer l'étanchéité entre paroi de cuve et joint statique 19, les bords de l'ouverture 22 et les ailes 23, 24 du joint peuvent présenter des gorges périphériques et des parties en saillie correspondantes, comme illustré sur la fig. 7. Le joint statique 19 présente en son centre un évidement cylindrique destiné à recevoir une partie en saillie 70 du flasque avant 71 du moteur 7. On appelle flasque avant 71 du moteur la zone du moteur supportant le palier 72 par lequel sort l'arbre moteur 8. Ce flasque avant 71 comporte donc une partie en saillie 70 dans la direction de l'axe 8 et un épaulement 73, l'ensemble étant ici habillé d'une coiffe 74 en matière synthétique imperméable et électriquement isolante afin de protéger le flasque avant 71, ici métallique, de tout contact avec l'eau de la cuve. L'étanchéité entre le joint statique 19 et le flasque avant 71 du moteur ou, ici, la coiffe 74 qui le recouvre, est assurée de préférence à l'endroit de l'évidement cylindrique du joint, par une lèvre périphérique 25 portant élastiquement contre la partie en saillie 70 du flasque avant 71 (ou de la coiffe 74). De la sorte, cette étanchéité est réalisée en l'absence de pression longitudinale exercée par le moteur contre le joint statique 19 et est maintenue même en cas de légers déplacements longitudinaux du moteur ou d'oscillations du moteur autour de son axe. Le joint statique 19 est donc utilisé pour déterminer la position du moteur 7 par rapport à la cuve 1, il atténue la transmission des vibrations du moteur à la cuve, enfin il assure l'étanchéité entre la paroi de cuve et la structure externe fixe du moteur.

L'étanchéité entre l'espace intérieur à la cuve et les parties internes du moteur (palier 72, parties électriques . . .) est ici assurée par un joint tournant 9, constitué d'un anneau élastique solidaire de l'arbre 8 et dont une lèvre presse élastiquement contre une face perpendiculaire à l'axe appartenant à la coiffe 74 recouvrant le flasque avant du moteur. Pour isoler électriquement l'arbre 8 de l'eau de lavage, un manchon 81 en matériau imperméable et isolant le recouvre de son extrémité libre au voisinage du palier 72. Le manchon 81 est fixé à l'arbre 8. C'est sur ce manchon 81 que sont façonnés l'épaulement retenant le joint tournant 9 et la poulie motrice 10. Au delà de la poulie, le manchon 81 se prolonge par un axe destiné à recevoir la turbine de pompe 12 (fig. 1). On voit que l'étanchéité autour de l'arbre tournant n'est pas tributaire de la position relative du moteur et de la paroi de cuve. Le joint 20 est situé entre l'arbre 8 et le flasque avant du moteur, ou plus exactement entre les pièces isolantes qui coiffent ces deux éléments. Cette disposition évite d'avoir à positionner le moteur de façon très précise sur la cuve, et donc permet une certaine élasticité de sa fixation.

La fig. 8 est une illustration de moyens qui permettent de fixer le moteur à la cuve pour que son flasque avant occupe la position montrée sur la fig. 7. Pour simplifier, les éléments en sont montrés séparés. A l'arrière du moteur 7, le flasque 75 supportant le palier arrière de son arbre 8 comporte une partie 76 faisant saillie axialement. Cette partie en saillie 76 peut être enserrée dans un collier 30, une bague de matière élastique 31 étant intercalée entre le collier 30 et la partie 76 en saillie du moteur. Le collier 30 est porté par une structure 32 avec laquelle il fait corps, le tout étant moulé en polyproplylène par exemple, elle-même fixée à la cuve 1 de la machine à laver (fig. 1).

Cette fixation est obtenue par deux coulisseaux 33 en T, appartenant à la structure 32 porte collier, susceptibles de s'engager dans deux glissières 34, de profil correspondant, aménagées dans des membrures 35 appartenant à la cuve (voir figs 2 et 3). Par exemple, si la cuve 1 est en matière synthétique injectée, membrures 35 et glissières 34 sont obtenues lors du moulage. Les glissières 34 et les coulisseaux 33 sont parallèles à l'arbre du moteur, ce qui permet notamment d'adapter cette fixation à des moteurs de longueurs diverses. L'immobilisation des coulisseaux dans leur glissière est obtenue par tout moyen approprié, par exemple au moyen de dents formant cliquets. Dans l'exemple illustré, la partie en saillie 76 du flasque arrière du moteur, ainsi que le collier 30 et la bague élastique 31 sont de section polygonale afin de n'autoriser que de faibles oscillations du moteur autour de son axe.

### Revendications

1. Machine à laver et à essorer le linge comportant une cuve (1) destinée à recevoir l'eau de lavage ou de rinçage, à l'intérieur de laquelle peut tourner un tambour à linge (4) d'axe (AA) sensiblement horizontal supporté par au moins un arbre (5) monté dans un palier logé dans la paroi de cuve, un moteur électrique (7) fixé à la cuve entraînant le tambour par l'intermédiaire d'une courroie (11) tendue entre une poulie motrice (10) et une poulie réceptrice solidaire du tambour, les poulies motrice et réceptrice et la courroie étant situées à l'intérieur de la cuve et baignant au moins partiellement dans l'eau de lavage ou de rinçage, la cuve (1) étant disposée dans une carrosserie (3) à laquelle elle est liée de façon élastique et amortie, la poulie motrice (10) étant montée sur l'arbre (8) du moteur d'entraînement parallèle à l'axe (AA) du tambour et traversant la paroi de cuve en un point situé entre le moteur et la poulie, caractérisée en ce que la poulie réceptrice est implantée sur la surface cylindrique (6) du tambour (4), le moteur étant fixé pour que le centre de gravité (G) du bloc laveur constitué par le tambour, sa poulie, la cuve et le moteur soit sensiblement dans le plan de symétrie (P) perpendiculaire à l'axe du tambour.

2. Machine à laver selon la revendication 1, caractérisée par le fait que la surface cylindrique (6) du tambour reçoit directement la courroie d'entraînement (10), constituant elle-même la poulie réceptrice.

3. Machine à laver selon l'une quelconque des revendications 1 et 2, caractérisée par le fait que l'arbre (8) du moteur pénètre dans la cuve en sa partie la plus basse et y reçoit à son extrémité une turbine de pompe (12) destinée à tourner dans un corps de pompe aménagé dans la paroi de cuve, pour la vidange de l'eau de lavage ou de rinçage.

4. Machine à laver selon l'une quelconque des revendications 1 à 3, à chargement par le dessus, à carrosserie parallélépipèdique et dans laquelle le tambour est supporté par deux arbres (5), caractérisée par le fait que, selon la direction axiale de la cuve, le rapport longueur de cuve/largeur de carrosserie est voisin de 0,9, et les flasques de la cuve ont une forme approximativement conique à concavité tournée vers l'intérieur, chaque flasque étant inscrit dans un cône (C) dont le sommet est le point d'intersection (40) de l'axe de cuve (AA) avec la carrosserie (3) et dont l'angle au sommet mesure approximativement 160°.

5. Machine à laver selon l'une quelconque des revendications 1 à 4, caractérisée par le fait que la position du palier (112) dans lequel est monté l'arbre de tambour est ajustable radialement par rapport à la cuve.

6. Machine à laver selon la revendication 5, caractérisée par le fait que ledit palier (112) est inséré dans un support de palier (113) susceptible de tourner dans un logement (111) de révolution traversant la paroi de la cuve, l'axe (BB) dudit logement étant parallèle et distinct de l'axe (AA) du palier.

7. Machine à laver selon la revendication 6, caractérisée par le fait que le support de palier (113) est axialement retenu dans son logement, dans un sens par butée sur un épaulement (115) dudit logement, et dans l'autre sens au moyen d'ergots (116) s'engageant axialement dans des encoches pratiquées dans un collet (117) du logement et se verrouillant sur ledit collet lors de la rotation du support de palier (113) dans le logement (111).

8. Machine à laver selon la revendication 7, caractérisée par le fait que le support de palier (213) et sa butée (215) en forme d'épaulement dans le logement sont munis sur leurs surfaces en contact de crans (231) et plots (230) élastiques créant une résistance à la rotation du support de palier (213) dans son logement (211).

9. Machine à laver selon l'une quelconque des revendications 6 et 7, caractérisée par le fait que le support de palier (113) et son logement (111) dans la paroi de cuve sont munis sur leur pourtour d'un accouplement à dents (123) et cliquet (122) créant une résistance à la rotation du support de palier dans son logement.

10. Machine à laver selon l'une quelconque des revendications 6 à 9, caractérisée par le fait que ledit logement (111) comporte une butée périphérique (124) limitant la rotation du support de palier par rapport à la cuve.

11. Machine à laver selon l'une quelconque des revendications 6 à 10, caractérisée par le fait que le support de palier (113) et son logement (111) comportent des surfaces cylindriques de révolution axiales et complémentaires, la surface cylindrique du support de palier étant creusée d'une gorge périphérique destinée à recevoir un joint élastique torique (118) assurant l'étanchéité entre la cuve et le support de palier.

12. Machine à laver selon l'une quelconque des revendications 6 à 11, caractérisée par le fait que le support de palier (113) comporte à l'intérieur de la cuve un épaulement (120) de surface plane perpendiculaire à l'axe et sur lequel vient presser un joint à lèvre (119) monté sur l'arbre (5) du tambour pour assurer l'étanchéité entre la cuve et le palier (112).

13. Machine à laver selon l'une quelconque des revendications 6 à 12, caractérisée par le fait que le support de palier (113) est réalisé en matière synthétique moulée d'une seule pièce par injection.

14. Machine à laver selon les revendications 12 et 13 prises ensemble, caractérisée par le fait que l'épaulement (120) sur lequel porte le joint est constitué d'une rondelle d'acier inoxydable autour de laquelle est surmoulé le support de palier (113).

15. Machine à laver selon l'une quelconque des revendications 12 à 14, caractérisée par le fait que le flasque avant (71) du moteur, que traverse l'arbre (8), vient en butée sur un joint statique (19) disposé dans l'orifice de traversée de la paroi de cuve, un joint (9) entre pièces en rotation relative étant monté entre l'arbre moteur et ledit flasque avant.

16. Machine à laver selon la revendication 15, caractérisée par le fait que le flasque avant (71) du moteur en contact avec les joints (9, 19), ainsi que l'arbre moteur (8) depuis le joint tournant (9) jusqu'à son extrémité libre située à l'intérieur de la cuve sont constitués ou recouverts de matériau électriquement isolant.

17. Machine à laver selon l'une quelconque des revendications 15 ou 16, caractérisée par le fait que le flasque avant (71) du moteur fait saillie (70) vers l'intérieur de la cuve à travers le joint statique (19).

18. Machine à laver selon la revendication 17, caractérisée par le fait que le joint statique (19) est constitué d'un anneau de section rectangulaire en matière élastique présentant une gorge périphérique extérieure pour sa mise en place autour de l'orifice de traversée de la paroi de la cuve, et une lèvre d'étanchéité (25) à sa périphérie interne.

19. Machine à laver selon l'une quelconque des revendications 17 et 18, caractérisée par le fait que le joint statique (19) et la partie (70) du flasque avant du moteur qu'il reçoit sont de révolution autour de l'axe moteur.

20. Machine à laver selon l'une quelconque des revendications 15 à 19, caractérisée par le fait que le moteur est maintenu en position contre le joint statique (19) au moyen d'un collier (30) enserrant une partie en saillie (76) de son flasque arrière (75), ledit collier (30) étant fixé à la cuve.

21. Machine à laver selon la revendication 20, caractérisée par le fait que le collier (30) de fixation arrière du moteur est lui-même monté sur la paroi de la cuve au moyen d'au moins un accouplement par glissière (34) et coulisseau (33) parallèle à l'axe moteur.

22. Machine à laver selon l'une quelconque des revendications 20 ou 21, caractérisée par le fait que le collier (30) de fixation arrière du moteur et la partie (76) du flasque arrière qu'il reçoit ne sont pas de révolution.

## Claims

1. A laundry washing and drying machine, comprising a tub (1), which is arranged to contain washing or rinsing water and inside which a laundry drum (4) is mounted for rotation, which drum has a substantially horizontal axis (AA) and is supported by at least one shaft (5), which is mounted in a bearing seated in the tub wall, an electric motor (7) which is secured to the tub and which drives the drum via a belt (11) which is tensioned between a motor pulley (10) and a driven pulley which is rigidly connected to the drum, the motor pulley, the driven pulley, and the belt being situated within the tub and being at least partly immersed in the washing or rinsing water, the tub being situated in a housing (3) to which it is connected by a damped resilient suspension, the motor-pulley (10) being mounted on the motor drive shaft (8), which shaft extends through the wall of the tub at a point which is situated between the motor and the pulley, the motor drive shaft being aligned substantially parallel to the drum axis (AA), characterized in that the driven pulley is arranged on the cylindrical surface (6) of the drum (4), the motor being mounted so that the centre of gravity (G) of the washing assembly constituted by the drum, its pulley, the tub and the motor is situated substantially in the plane of symmetry (P) perpendicular to the drum axis.

2. A washing machine as claimed in Claim 1, characterized in that the cylindrical surface (6) of the drum is in direct contact with the drive belt (10), the drum surface itself constituting the driven pulley.

3. A washing machine as claimed in any one of the Claims 1 and 2, characterized in that the motor shaft (8) extends within the tub at the lowest part thereof, the shaft carrying at its end a pump impeller (12) which is arranged to rotate in a pump body formed in the tub wall, for draining the washing or rinsing water.

4. A washing machine as claimed in any one of the Claims 1 to 3, of the top loading type, having a parallelepiped housing in which the drum is supported by two shafts (5), characterized in that in the axial direction of the tub the ratio of the width of the housing to the length of the tub is approximately 0.9, and the side walls of the tub have a substantially conical shape whose concave sides face the interior, each side wall being inscribed in a cone (C) whose apex is the point of intersection (40) of the tub axis (AA) with the housing (3) and whose apex angle is approximately 160°.

5. A washing machine as claimed in any one of the Claims 1 to 4, characterized in that the position of the bearing (112) in which the drum shaft is mounted is radially adjustable relative to the tub.

6. A washing machine as claimed in Claim 5, characterized in that said bearing (112) is mounted in a bearing support (113) which is rotatable in a rotationally symmetrical seating (111) which passes through the tub wall, the axis (BB) of said seating being parallel to and not coincident with the bearing axis (AA).

7. A washing machine as claimed in Claim 6, characterized in that the bearing support (113) is axially retained in its seating, in one direction by abutment with a shoulder (115) of said seating and in the other direction by means of pins (116) which axially engage with slots formed in a flange (117) of the seating and which become latched relative to said flange when the bearing support (113) is rotated in the seating (111).

8. A washing machine as claimed in Claim 7, characterized in that the bearing support (213) and its stop (215) in the form of a shoulder in the seating are provided with notches (231) and elastic stops (230) on their contact surfaces, which counteract a rotation of the bearing support (213) in its seating (211).

9. A washing machine as claimed in any one of the Claims 6 and 7, characterized in that the bearing support (113) and its seating (111) in the tub wall are provided with a teeth (123)-and-ratchet (122) coupling at their circumference, which counteract a rotation of the bearing support in its seating.

10. A washing machine as claimed in any one of the Claims 6 to 9, characterized in that said seating (111) comprises a peripheral stop (124) which limits the rotation of the bearing support relative to the tube.

11. A washing machine as claimed in any one of the Claims 6 to 10, characterized in that the bearing support (113) and its seating (111) comprise axial and complementary cylindrical surfaces of revolution, the cylindrical surface of the bearing support being formed with a peripheral groove which is adapted to receive an elastic O-ring (118) which provides the sealing between tub and the bearing support.

12. A washing machine as claimed in any one of the Claims 6 to 11, characterized in that the bearing support (113) inside the tub comprises a shoulder (120) with a plane surface perpendicular to the axis, against which surface a lip seal (119) presses, which seal is mounted on the drum shaft (5) in order to ensure water-tight sealing between the tub and the bearing (112).

13. A washing machine as claimed in any one of the Claims 6 to 12, characterized in that the bearing support (113) is integrally injection-moulded from a synthetic material.

14. A washing machine as claimed in Claims 12 and 13 in combination, characterized in that the shoulder (120) with which the seal engages is constituted by a stainless steel washer around which the bearing support (113) is moulded.

15. A washing machine as claimed in any one of the Claims 1 to 14, characterized in that the front wall (71) of the motor, through which the shaft (8) extends, engages with a stationary seal (19) situated in the feed-through hole in the tub wall, a seal (9) provided between parts which rotate relative to each other being mounted between the motor shaft and said front wall.

16. A washing machine as claimed in Claim 15, characterized in that the front wall (71) of the motor which is in contact with the seals (9, 19), as well as the motor shaft (8), from the rotary seal (9) up to its free end which is situated inside the tube, are constituted by or covered with an electrically insulating material.

17. A washing machine as claimed in any one of the Claims 15 or 16, characterized in that the front wall (71) of the motor has a portion (70) which extends into the interior of the tub through the stationary seal (19).

18. A washing machine as claimed in Claim 17, characterized in that the stationary seal (19) is constituted by a ring of rectangular cross-section and of an elastic material, having an outer circumferential groove for mounting it around the feedthrough hole in the wall of the tub, and a sealing lip (25) at its inner circumference.

19. A washing machine as claimed in any one of the Claims 17 and 18, characterized in that the stationary seal (19) and the portion (70) of the front wall of the motor with which it cooperates are rotationally symmetrical about the motor axis.

20. A washing machine as claimed in any one of the Claims 15 to 19, characterized in that the motor is retained in position against the stationary seal (19) by means of a ring (30) which retains a projecting portion (76) of its rear wall (75), said ring (30) being secured to the tub.

21. A washing machine as claimed in Claim 20, characterized in that the rear retaining ring (30) of the motor itself is mounted on the wall of the tub by means of at least one coupling with a recess (34) and rail (33) which extends parallel to the motor axis.

22. A washing machine as claimed in any one of the Claims 20 or 21, characterized in that the rear retaining ring (30) of the motor and the portion (76) of the rear wall with which it engages are not rotationally symmetrical.

**Patentansprüche**

1. Maschine zum Waschen und Trocknen von Wäsche, mit einem Bottich (1) für Wasch- und Spülwasser, in dessen Innerem eine Waschtrommel (4) drehen kann, deren Achse (AA) sich nahezu horizontal erstreckt und die von mindestens einer Achse (5) getragen wird, die in einem Lager in der Wand des Bottichs liegt, mit einem Elektromotor (7), der an dem Bottich angeordnet ist und die Trommel mittels eines Zahnriemens (11) antreibt, welcher Riemen zwischen einer Antriebsriemenscheibe (10) und einer einen Teil mit der Trommel bildenden angetriebenen Riemenscheibe liegt, wobei der Riemen innerhalb des Bottichs liegt und wenigstens teilweise in das Wasch- oder Spülwasser eingetaucht ist, wobei der Bottich (1) in einem Gehäuse (3) angeordnet ist, an dem er auf elastische und stossdämpfende Weise befestigt ist und wobei die Antriebsriemenscheibe (10) auf der Antriebsmotorwelle (8) parallel zur Achse (AA) der Trommel angeordnet ist und durch die Wand des Bottichs hindurchgeht, und zwar an einer Stelle, die zwischen dem Motor und der Antriebsriemenscheibe liegt, dadurch gekennzeichnet, dass die angetriebene Riemenscheibe auf der zylinderförmigen Oberfläche (6) der Trommel (4) liegt, wobei der Motor derart angeordnet ist, dass der Schwerpunkt (G) des Waschblocks, der durch die Trommel, ihre Riemenscheibe, den Bottich und den Motor gebildet wird, nahezu in der Symmetrieebene (P) senkrecht zur Achse der Trommel liegt.

2. Waschmaschine nach Anspruch 1, dadurch gekennzeichnet, dass die zylinderförmige Oberfläche (6) der Trommel unmittelbar den Antriebsriemen (10) erhält, wodurch sie selber als angetriebene Riemenscheibe wirksam ist.

3. Waschmaschine nach einem der Ansprüche 1 bis 2, dadurch gekennzeichnet, dass die Antriebsmotorwelle (8) in den Bottich hineinragt, und zwar am unteren Teil, und eine Pumpturbine (12) aufweist, die in einem Pumpkörper sich dreht, der an der Wand des Bottichs angeordnet ist, und zwar zum Abführen des Wasch- oder Spülwassers.

4. Waschmaschine nach einem der Ansprüche 1 bis 3 für Obenfüllung mit parallelepipedförmigem Gehäuse, in dem die Trommel durch zwei Beine (5) getragen wird, dadurch gekennzeichnet, dass in der axialen Richtung des Bottichs das Verhältnis der Grösse des Gehäuses zu der maximalen Länge des Bottichs nahezu 0,9 ist und die Wände des Bottichs eine nahezu kegelförmige Form haben, deren Kegelform nach innen zeigt, wobei jede Wand in einem Kegel (C) liegt, dessen Spitze der Schnittpunkt (40) der Achse des Bottichs (AA) mit dem Gehäuse (3) ist und dessen Scheitelwinkel nahezu 160° beträgt.

5. Waschmaschine nach einem der Ansprüche 1 bis 4, dadurch gekennzeichnet, dass die Lage des Lagers (112), in dem die Achse der Trommel angeornet ist, gegenüber dem Bottich in radialer Richtung einstellbar ist.

6. Waschmaschine nach Anspruch 5, dadurch gekennzeichnet, dass das genannte Lager (112) in einer Lagerhalterung (113) liegt, die in einem Drehgehäuse (111) durch die Wand des Bottichs drehen kann, wobei die Achse (BB) des genannten Gehäuses sich parallel zu der Achse (AA) des Lagers erstreckt.

7. Waschmaschine nach Anspruch 6, gekennzeichnet durch die Tatsache, dass die Lagerhaltung (13) in axialer Richtung in seinem Gehäuse gehalten wird, und zwar in der einen Richtung durch Anschlag gegen eine Haube (115) des genannten Gehäuses und in der anderen Richtung durch Stifte (116), die in axialer Richtung mit Einschnitten in einem Kragen (117) des Gehäuses zusammenarbeiten und in dem genannten Kragen einklinken bei Drehung der Lagerhalterung (113) in dem Gehäuse (111).

8. Waschmaschine nach Anspruch 7, gekennzeichnet durch die Tatsache, dass die Lagerhalterung (213) und der Anschlag (215) in Form einer Schulter in dem Gehäuse auf ihren Oberflächen mit Schlitzen (231) und federnden Vorsprüngen (230) versehen sind, die bei Drehung der Lagerhalterung (213) in dem Gehäuse (211) einen Widerstand bilden.

9. Waschmaschine nach einem der Ansprüche 6 und 7, dadurch gekennzeichnet, dass die Lagerhalterung (113) und ihr Gehäuse (111) in der Wand des Bottichs an ihrem Umfang mit einer Zahn-Klinkenkupplung (123, 122) versehen sind, die bei Drehung der Lagerhalterung in dem Gehäuse einen Widerstand bildet.

10. Waschmaschine nach einem der Ansprüche 6 bis 9, dadurch gekennzeichnet, dass das genannte Gehäuse (111) einen äusseren Anschlag hat (124), der die Drehung der Lagerhalterung gegenüber dem Bottich begrenzt.

11. Waschmaschine nach einem der Ansprüche 6 bis 10, dadurch gekennzeichnet, dass die Lagerhalterung (113) und ihr Gehäuse (111) komplementäre zylinderförmige axiale Umdrehungsflächen haben, wobei die zylinderförmige Oberfläche der Lagerhalterung vertieft liegt in einer umlaufenden Nut für eine federnde ringförmige Verbindung (118), wodurch die Abdichtung zwischen dem Bottich und der Lagerhalterung gewährleistet ist.

12. Waschmaschine nach einem der Ansprüche 6 bis 11, dadurch gekennzeichnet, dass die Lagerhalterung (113) im Inneren des Bottichs einen Vorsprung (120) der ebenen Fläche aufweist, die senkrecht auf der Achse steht und auf die eine Lippendichtung (119) gepresst wird, die auf der Trommelwelle (5) angeordnet ist zur Gewährleistung einer Abdichtung zwischen dem Bottich und dem Lager (112).

13. Waschmaschine nach einem der Ansprüche 6 bis 12, dadurch gekennzeichnet, dass die Lagerhalterung (113) aus Kunststoff in einem Teil im Spritzgussverfahren hergestellt ist.

14. Waschmaschine nach einem der Ansprüche 12 und 13, dadurch gekennzeichnet, dass die Schulter (120), auf der die Dichtung liegt, aus einem O-Ring aus rostfreiem Stahl besteht, um den die Lagerhalterung (113) geformt ist.

15. Waschmaschine nach einem der Ansprüche 1 bis 14, dadurch gekennzeichnet, dass die Vorderwand (71) des Motors, durch die die Achse (8) hindurchgeht, an einer statischen Verbindung (19) endet, die in der Öffnung durch die Wand des Bottichs liegt, wobei eine Verbindung (9) zwischen gegenübereinander drehenden Teilen zwischen der Motorwelle und der genannten Vorderwand vorgesehen ist.

16. Waschmaschine nach Anspruch 15, dadurch gekennzeichnet, dass die Vorderwand (71) des Motors, die mit den Verbindungen (9, 19) in Verbindung steht, sowie die Motorwelle (8), die von der drehenden Verbindung (9) bis an das Ende frei in dem Inneren des Bottichs liegt, aus elektrisch isolierendem Material besteht bzw. damit bedeckt ist.

17. Waschmaschine nach einem der Ansprüche 15 oder 16, dadurch gekennzeichnet, dass die Vorderwand des Motors (71) zum Inneren des Bottichs durch die statische Verbindung (19) vorspringt.

18. Waschmaschine nach Anspruch 17, dadurch gekennzeichnet, dass die statische Verbindung (19) in Form eines O-Ringes aus elastischem Werkstoff besteht und einen umlaufenden Kragen mit einer inneren Lippendichtung (25) bildet zum Festlegen an seinem Platz um die Öffnung in der Wand des Bottichs.

19. Waschmaschine nach einem der Ansprüche 17 und 18, dadurch gekennzeichnet, dass die statische Verbindung (19) und der Teil (70) der Vorderwand des Motors um die Motorachse rotationssymmetrisch ist.

20. Waschmaschine nach einem der Ansprüche 15 bis 19, dadurch gekennzeichnet, dass der Motor mittels eines Kragens (30) gegenüber der statischen Verbindung (19) am Platz gehalten wird, welcher Kragen einen vorspringenden Teil (76) der Rückwand (75) einschliesst, wobei der Kragen (30) an dem Bottich befestigt ist.

21. Waschmaschine nach Anspruch 20, dadurch gekennzeichnet, dass der Kragen (30) zur Befestigung der Rückseite des Motors selbst an der Wand des Bottichs angeordnet ist, und zwar mittels wenigstens einer Kupplung mit Gleitelementen (34) und Kulissen (33) parallel zu der Motorachse.

22. Waschmaschine nach einem der Ansprüche 20 oder 21, dadurch gekennzeichnet, dass der Kragen (30) zur Befestigung der Rückseite des Motors und der Teil (76) der Rückwand nicht rotationssymmetrisch sind.

# FIG.1

1

115

114

111

113

112

5

B —————————————— B

A —————————————— A

118

4

116

109

117

121

119

120

116

**FIG. 4**

16

15

14

21

1

35

22

17

16

**FIG.2**

16

16

16

1

14

35

21

22

**FIG.3**

FIG.5a

FIG.5b

FIG.6

FIG.7

FIG.8